**Europäisches Patentamt**

**European Patent Office**

**Office européen des brevets**

(19)

(11) Veröffentlichungsnummer: **0 060 906**

**A1**

## (12) EUROPÄISCHE PATENTANMELDUNG

(21) Anmeldenummer: **81102137.7**

(22) Anmeldetag: **21.03.81**

(51) Int. Cl.³: **B 65 D 35/08**

(43) Veröffentlichungstag der Anmeldung:
**29.09.82** Patentblatt **82·39**

(84) Benannte Vertragsstaaten:
**AT BE CH DE FR GB IT LI LU NL SE**

(71) Anmelder: **STAHLGRUBER Otto Gruber GmbH & Co.**
**Einsteinstrasse 130**
**D-8000 München 80(DE)**

(72) Erfinder: **Gottauf, Georg**
**Elektrastrasse 56**
**D-8000 München 80(DE)**

(74) Vertreter: **Huss, Carl-Hans, Dipl.-Ing. et al,**
**Rathausstrasse 14**
**D-8100 Garmisch-Partenkirchen(DE)**

(54) **Tube aus Kunststoff.**

(57) Zur genaueren und portionsweisen Dosierung des Inhalts weist eine Tube aus Kunststoff einen membranenartigen Bereich (5) auf, der z.B. durch eine ihn eingrenzende, umlaufende Rinne, Rille, Kerbe, Sicke oder dgl. (6) gebildet ist, oder eine geringere Wanddicke als der übrige Tubenkörper (3) aufweist. Die Entleerung kann durch einen ovalen Querschnitt der Tube weiter erleichtert werden.

FIG. 1

EP 0 060 906 A1

- 1 -

G 547-He
Garmisch-Partenkirchen,
20. März 1981
He/Sh

Firma Stahlgruber
Otto Gruber GmbH & Co.
Einsteinstrasse 130
D-8000 München - 80

Tube aus Kunststoff

Tuben aus Kunststoff sind bekannt und bürgern sich infolge mancher hier nicht zu erörternder Vorteile immer mehr ein. Gegenüber den vorbekannten, aus weichem Metallfolienmaterial bestehenden haben sie aber den Nachteil, dass sie sich nicht vom Ende her bleibend verformbar zusammenquetschen und aufrollen lassen, sondern nach dem für die dosierte Entleerung erforderlichen Druck auf den Tubenkörper in die Ursprungsform "zurückspringen". Aus diesem Grunde können, wie allgemein bekannt, Kunststofftuben verhältnismässig schwierig entleert werden, und das wird insbesondere dann als großer Nach-

- 2 -

teil angesehen, wenn es auf eine portionsweise, dosierte Entleerung ankommt, wie das beispielsweise für die Reparatur von Schadensstellen an Gummigegenständen mittels vorfabrizierter Flicken der Fall ist, bei welcher Reparatur die Schadensstelle mit einer bestimmten Menge Vulkanisierflüssigkeit eingestrichen werden muss.

Der Erfindung liegt daher die Aufgabe zugrunde, eine Tube aus Kunststoff zu schaffen, welche die genau dosierte portionsweise Entleerung ermöglicht.

Diese Aufgabe löst die Erfindung dadurch, dass der Tubenkörper einen membranartigen Bereich aufweist, der z.B. durch eine umlaufende Rinne, Rille, Kerbe, Sicke oder dgl. begrenzt wird und bzw. oder eine geringere Wanddicke als der übrige Tubenkörper aufweist.

Vorzugsweise weist die Tube einschliesslich des sich vom Mundstück aus erweiternden Übergangsteiles einen ovalen Querschnitt auf.

Die Erfindung ist an einem Ausführungsbeispiel in der Zeichnung veranschaulicht und anhand dieser nachfolgend beschrieben; es stellen dar:

Fig. 1   eine Aufsicht auf eine Tube nach der Erfindung in gering vergrössertem Maßstab,

Fig. 2   einen Querschnitt durch eine Tube

- 3 -

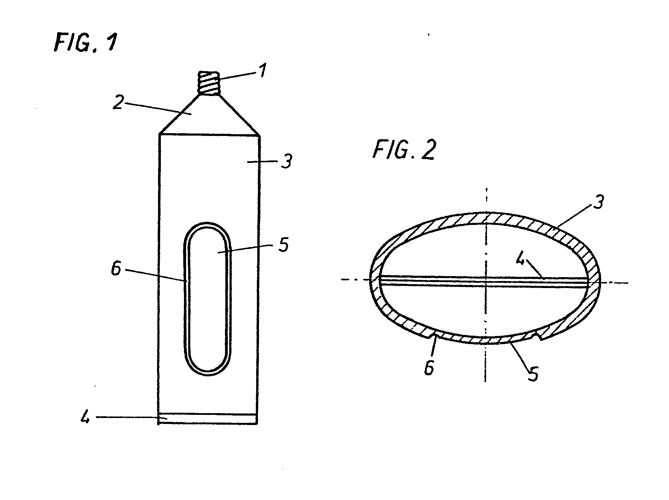

nach Fig. 1 in weiter vergrössertem
Maßstab.

Die Tube kann in üblicher Weise einstückig
aus Kunststoff gespritzt sein und besteht dann aus
dem ein Aussengewinde für die Verschlußkappe aufweisenden zylindrischen Verschlußteil 1, dem sich
erweiternden Übergangsteil 2 und dem schlauchförmigen Tubenkörper 3, dessen offenes Ende nach der
Füllung bei 4 z.B. durch Verschweißen verschlossen
wird.

Erfindungsgemäss weist der Tubenkörper 3
einen membranenartigen Bereich 5 auf, der bei dem
dargestellten Ausführungsbeispiel durch eine seine
Gestalt und Größe bestimmende Rinne, Rille, Kerbe,
Sicke oder dgl. 6 gebildet wird. Er kann ausserdem, wie Fig. 2 veranschaulicht, eine geringere
Wanddicke aufweisen als der übrige Teil des
Tubenkörpers 3 und kann auch ohne Rinnen, Rillen,
Sicken oder dgl. 6 nur durch seine gegenüber dem
übrigen Tubenkörper 3 verringerte Wanddicke entstehen.

Der membranenförmige Bereich 5, der entsprechend durch Aufdruck oder dgl. markiert sein
kann, ist für die Auflage des drückenden Federgliedes, also regelmässig des vorderen Daumengliedes, bestimmt. Wenn dann die Tube in Benutzung
genommen, also zwischen Daumen und Zeigefinger genommen wird und der Daumen auf dem Bereich 5 liegt,
wird für die Abgabe eines Teils der Tubenfüllung
ein Druck ausgeübt, und da durch die Kerben oder

- 4 -

- 4 -

dgl. 6 oder die Wanddickenverdünnung der Bereich 5 gegenüber dem übrigen Tubenkörper 3 eine Eigenbeweglichkeit erhält, wird der grössere Teil dieses Druckes nicht auf den ganzen Tubenkörper verteilt, sondern in diesem Bereich eingeleitet. Bei Druck wird also in erster Linie der Bereich 5 wie eine Membrane eingedrückt und dadurch eine sehr viel bessere Dosierung bei der Entleerung des Tubeninhaltes als bei der Handhabung vorbekannter Kunststofftuben erzielt.

Das in der Zeichnung dargestellte Ausführungsbeispiel besitzt ferner durchgehend, also einschliesslich des Übergangsteils 2, einen ovalen Querschnitt. Diese Gestaltung verbessert nicht nur die Verpackungsfähigkeit, sondern vor allem auch die Dosierung, weil sich ein ovaler Querschnitt an sich schon leichter verformen lässt, als der als besonders biegesteif bekannte runde, und weil ausserdem der Preßweg bis zum Aufeinandertreffen gegenüberliegender Wandbereiche längs der kleinen Achse des Ovals geringer ist. Dies gilt insbesondere hinsichtlich der völligen Entleerung der Tube, also im Bereich des Übergangsteils 2, der bei rundem Querschnitt sehr schwer verformbar ist.

- 1 -

<u>P a t e n t a n s p r ü c h e</u>

1.    Tube aus Kunststoff, bestehend aus einem Verschlußstück, einem kegelstumpfförmigen Übergangsstück und einem nach der Füllung verschlossenen schlauchförmigen Tubenkörper, dadurch g e - k e n n z e i c h n e t , dass der Tubenkörper (3) einen membranenartigen Bereich (5) aufweist.

2.    Tube nach dem Anspruch 1, dadurch g e - k e n n z e i c h n e t , dass der membranenartige Bereich (5) durch eine ihn eingrenzende umlaufende Rinne, Rille, Kerbe, Sicke oder dgl. (6) gebildet ist.

3.    Tube nach dem Anspruch 1, dadurch g e - k e n n z e i c h n e t , dass der membranenartige Bereich (5) durch eine geringere Wanddicke als der übrige Tubenkörper (3) gebildet ist.

4.    Tube nach den Ansprüchen 1 bis 3, dadurch g e k e n n z e i c h n e t , dass sie einschliesslich des sich erweiternden Übergangsteils (2) einen ovalen Querschnitt aufweist.

**FIG. 1**

2 — 1
3
5
6
4

**FIG. 2**

3
4
6
5

**Europäisches Patentamt**

# EUROPÄISCHER RECHERCHENBERICHT

EP 81 10 2137.7

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| | US – A – 3 648 895 (STRAZDINS)<br>* Fig. 10 bis 16 *<br>-- | 1-3 | B 65 D 35/08 |
| | GB – A – 990 473 (MERCK & CO.)<br>* Fig. 1 bis 5 *<br>-- | 1-3 | |
| | US – A – 2 682 355 (ROBBINS)<br>* Fig. 1, 3, 4 *<br>-- | 1,3 | |
| | FR – A – 1 502 189 (REXALL DRUG AND CHEMICAL CO.)<br>* Ansprüche 1, 2; Fig. 1 bis 12 *<br>-- | 1,4 | **RECHERCHIERTE SACHGEBIETE (Int. Cl.³)**<br><br>B 65 D 35/00 |
| A | US – A – 4 020 978 (SZCZEPANSKI)<br>-- | | |
| A | FR – A7 – 2 288 445 (GOIFFON)<br>-- | | |
| A | FR – A – 1 535 749 (POMEON)<br>-- | | |
| A | US – A – 2 605 018 (CROCE et al.)<br>-- | | |
| A | DE – C – 672 535 (STAPPERT)<br>---- | | |

Der vorliegende Recherchenbericht wurde für alle Patentansprüche erstellt.

| Recherchenort | Abschlußdatum der Recherche | Prüfer |
|---|---|---|
| Berlin | 28-10-1981 | SCHLABBACH |

EPA form 1503.1 06.78